# EUROPÄISCHE PATENTSCHRIFT

(11) **EP 3 835 849 B1**
(45) Veröffentlichungstag und Bekanntmachung des Hinweises auf die Patenterteilung: **24.09.2025**
(21) Anmeldenummer: 20207066.0
(22) Anmeldetag: 12.11.2020
(51) Int. Cl.: G02B 27/01, B60K 35/00, B60R 1/00, G02B 27/00, B60K 35/28, B60K 35/40, B60K 35/80, B60K 35/23

(54) **OPTISCHES SYSTEM ZUR ERZEUGUNG EINES ZWEI- ODER DREIDIMENSIONALEN BILDES**
OPTICAL SYSTEM FOR GENERATING A TWO OR THREE-DIMENSIONAL IMAGE
SYSTÈME OPTIQUE PERMETTANT DE GÉNÉRER UNE IMAGE À DEUX OU TROIS DIMENSIONS

(30) Priorität: 13.12.2019 DE 102019219518
(43) Veröffentlichungstag der Anmeldung: 16.06.2021
(73) Patentinhaber: Continental Automotive Technologies GmbH, 30175 Hannover (DE)
(72) Erfinder: Speckels, Jens - c/o Continental Automotive GmbH, 65824 Schwalbach a. Ts. (DE); Kern, Thorsten Alexander - c/o Continental Automotive GmbH, 65824 Schwalbach a. Ts. (DE); Richter, Björn Pablo - c/o Continental Automotive GmbH, 65824 Schwalbach a. Ts. (DE)
(74) Vertreter: Aumovio Corporation

(56) Entgegenhaltungen:
- CN-U- 207 752 235
- DE-A1- 102017 216 524
- DE-A1- 102019 205 138
- JP-A- 2007 148 092
- US-A1- 2019 212 557
- SALGADO-CONRADO LIZBETH: "A review on sun position sensors used in solar applications", RENEWABLE AND SUSTAINABLE ENERGY REVIEWS, vol. 82, 11 October 2017 (2017-10-11), pages 2128 - 2146, XP085314672, ISSN: 1364-0321, DOI: 10.1016/J.RSER.2017.08.040

## Beschreibung

Die Erfindung betrifft ein optisches System zur Erzeugung eines zwei- oder dreidimensionalen Bildes, umfassend eine Bildgebungseinheit zur optischen Übertragung und/oder Generierung von Bildinformationen und einen optischen Wellenleiter, welcher ausgebildet ist, die Bildinformationen in mindestens eine Richtung zu projizieren, ferner umfassend eine gegenüber dem optischen Wellenleiter geneigte Scheibe zur Reflexion der projizierten Bildinformationen des optischen Wellenleiters, so dass der Betrachter die Bildinformationen als ein virtuelles Bild in einem Anzeigebereich an einer der benutzerabgewandten Seite der Scheibe wahrnimmt.

Durch ein Head-Up Display werden dem Fahrer eines Fahrzeuges relevante Informationen während der Fahrt angezeigt. Diese werden im Bereich der Windschutzscheibe in das Sichtfeld des Fahrers eingeblendet. Um die Sicht des Fahrers dabei möglichst wenig zu behindern, wird das eingeblendete Bild als virtuelles Bild vor der Windschutzscheibe dargestellt, so dass der Fahrer möglichst gleichzeitig die Umgebung und die eingeblendeten Daten beobachten kann, ohne das Auge unterschiedlich akkommodieren zu müssen.

Nachteilig an diesem bekannten Head-Up-Display ist jedoch, dass auf die Windschutzscheibe von außen in Richtung des optischen Wellenleiters fallendes Störlicht von der reflektierten Oberfläche der Windschutzscheibe in eine Richtung gelenkt wird, in der sie über die Windschutzscheibe das Auge des Betrachters erreichen kann, und somit Irritationen beim Betrachter hervorruft.

Die JP 2007 148092 A beschreibt ein Head-Up-Display, bei der Anzeigeinhalte eines Displays über eine Windschutzscheibe reflektiert werden und so für einen Beobachter scheinbar in einem Bereich hinter der Windschutzscheibe in einer sogenannten Eye-box wahrnehmbar sind und die Eye-box durch ein Verschwenken einer Linse verschoben werden kann, wobei durch ein Verschwenken der Linse auch einfallendes Licht aus dem Sichtbereich eines Beobachters verschwenkt wird. Die US 2019/212557 beschreibt ein Head-Up-Display mit einem Wellenleiter, bei dem die Eye-box durch ein Verschwenken eines Spiegels oder das Verschwenken einer Bilderzeugungseinheit realisiert wird. Die DE 10 2019 205138 A1 beschreibt ein Head -Up-Display mit einer Bilderzeugungseinheit und einem Wellenleiter, bei der eine Eye-box (virtual display 2609) verschiebbar ist.

Die WO 2019 038 201 A2 offenbart ein Head-Up-Display aufweisend ein Anzeigeelement, ein Projektionssystem, eine Streuscheibe und ein Spiegelelement, wobei die Streuscheibe auf ihrer dem Projektionssystem zugewandten Seite fokussierende Elemente aufweist, und auf ihrer dem Projektionssystem abgewandten Seite eine lichtblockierende Maske.

Die CN 207752235 U offenbart ein Head-up-Display mit Windschutzscheibenprojektion, das ein Bildgenerierungsmodul und einen optischen Wellenleiter umfasst. Das Bildgenerierungsmodul ist seitlich am Wellenleiter angeordnet. Der Wellenleiter weist ein Einkoppel- und ein Auskoppelende auf, empfängt am Einkoppelende Licht vom Bildgenerierungsmodul und leitet es zum Auskoppelende weiter. Dort tritt das Licht aus, wird auf die Windschutzscheibe projiziert, von dieser reflektiert und in den Eyebox-Bereich gelenkt, sodass vor der Blickrichtung des Fahrers ein virtuelles Bild entsteht. Ferner umfasst das Head-up-Display einen Antriebsmotor, der den optischen Wellenleiter in Drehung versetzt.

Es ist daher eine Aufgabe der Erfindung ein hinsichtlich Reflexionen verbessertes optisches System anzugeben.

Diese Aufgabe wird durch ein optisches System mit den Merkmalen des Anspruchs 1 gelöst.

In den Unteransprüchen sind weitere vorteilhafte Maßnahmen aufgelistet, die miteinander kombiniert werden können, um weitere Vorteile zu erzielen.

Die Aufgabe wird gelöst durch ein optisches System zur Erzeugung eines zwei-oder dreidimensionalen Bildes, umfassend eine Bildgebungseinheit zur optischen Übertragung und/oder Generierung von Bildinformationen und einen optischen Wellenleiter, welcher ausgebildet ist, die Bildinformationen in mindestens eine Richtung zu projizieren und ferner umfassend eine gegenüber dem optischen Wellenleiter geneigte Scheibe zur Reflexion der projizierten Bildinformationen des optischen Wellenleiters, so dass der Betrachter die Bildinformationen als ein virtuelles Bild in einem Anzeigebereich an einer der benutzerabgewandten Seite der Scheibe wahrnimmt, wobei eine Strahlenerfassungseinheit zur Erfassung eines Einfallswinkelbereiches von auf den optischen Wellenleiter einfallende Strahlung vorgesehen ist, und eine Steuereinheit vorgesehen ist, welche mit der Strahlenerfassungseinheit zur Datenübertragung verbunden ist, und welche ein Verkippen des optischen Wellenleiters bei einem vorgegebenen Einfallswinkelbereich bewerkstelligt.

Dabei kann ein optischer Wellenleiter beispielsweise eine holografische Wellenleiter-Einrichtung (Holographic-Waveguide) sein. Diese kann beispielsweise ein Einkopplungsgitter und ein Auskopplungsgitter und eine Platte aufweisen. Der optische Wellenleiter ist in der Lage, hochauflösende Vollfarbbilder, die unter Verwendung von Lichtquellen mit breiter Bandbreite und Wellenlänge erzeugt werden, durch ein optisch durchlässiges oder "durchsichtiges" Medium auf das Auge eines Betrachters zu projizieren.

Auch andere flache spekularen Reflektoren können mit optischer Wellenleiter umfasst sein.

Als Scheibe kann eine Streuscheibe, beispielsweise eine Windschutzscheibe ausgebildet sein.

Einfallende Strahlung ist vorzugsweise Lichtstrahlung wie Sonneneinstrahlung/Sonnenlichtstrahlung.

Es wurde erkannt, dass ein solcher optischer Wellenleiter jedoch eine Reihe von spezifischen Reflektionen bei Interaktion mit der Sonne aufweist. Die kritische Interaktion entsteht bei direkter Sonneneinstrahlung, bei der das Licht der Sonne über den optischen Wellenleiter und die Scheibe in ein Fahrerauge eines Fahrers reflektiert wird. Die Helligkeit dieses Reflexionsstrahls kann mehrere 10.000 cd/m² betragen, und ist daher als sicherheitskritisch einzustufen.

Erfindungsgemäß wurde erkannt, dass gängige Dämpfungsstrategien, die eine Reduktion des Reflexionsstrahles über eine Louverfolie, Polarisatoren, sowie spektrale Filter umfassen, das Nutzlicht überproportional dazu dämpfen würden. Ferner erzeugt eine Verwendung beispielsweise einer Folie wie einer Louverfolie einen hohen Herstellungsaufwand und ist mit hohen Kosten verbunden. Weiter wurde erkannt, dass eine Verwendung von Polarisatoren, oder spektralen Filtern ebenfalls mit hohen Kosten durch die benötigte Güte der Folien verbunden ist.

Durch die Erfindung wird eine einfache Lösung zur Vermeidung von Reflexionsstrahlen, welche in das Fahrerauge fallen und dort für Irritationen sorgen, angegeben. Zur Messung der Sonneneinstrahlung wird eine Strahlenerfassungseinheit verwendet, welche zumindest datentechnisch mit der Steuereinheit verbunden ist.

Zur Vermeidung des Sonnenreflexes wird im Falle des Erreichens eines kritischen Winkels, bei dem ein Reflexionsstrahl das Fahrerauge trifft, der optische Wellenleiter, auf den das Licht einfällt, verkippt. Durch die Verkippung werden von beispielsweise dem Sonnenlicht erzeugte Reflexionsstrahlen zuverlässig aus dem Bereich des Fahrerauges heraus bewegt, so dass diese nicht mehr das Fahrerauge treffen.

Hier wurde erkannt, dass eine Verkippung möglich ist, da bei Verwendung eines optischen Wellenleiters eine Winkeltreue des eingekoppelten Lichtes vorliegt, so dass sich trotzt Bewegung des optischen Wellenleiters die Auskopplung nicht verändert.

Vorzugsweise ist das optische System als Head-Up-Display in einem Fahrzeug ausgebildet.

Vorzugsweise ist die Steuereinheit dazu ausgebildet, durch die Verkippung einen Ausfallwinkel der einfallenden Strahlung zu verändern. Durch den Ausfallwinkel kann der direkte Reflexionsstrahl, welcher ansonsten im Fahrerauge für Irritationen sorgt, verändert werden.

Weiterhin vorzugsweise ist die Steuereinheit dazu ausgebildet, eine Verkippung entlang einer Vertikalachse des optischen Wellenleiters zu bewerkstelligen. Die direkte Sonneneinstrahlung wandert somit entlang der Vertikalachse. Dies hat den Vorteil, dass der Fahrer durch typische Seitwärtsbewegungen, wie sie oftmals bei Fahrern auftreten können, sich nicht in den reflektierten Reflexionsstrahl hineinbewegt.

Weiterhin vorzugsweise ist die Steuereinheit dazu ausgebildet, den optischen Wellenleiter um einen Kippwinkel zwischen einer ersten Position und einer zweiten Position zu verkippen. Vorzugsweise liegen diese hinreichend weit auseinander, so dass ein unerwünschter Reflexionsstrahl das Fahrerauge in der jeweils anderen Position nicht erreicht. Durch das Vorhandensein von lediglich zwei Positionen kann ein schnelles Verkippen unterhalb von 500ms erzielt werden. Dies ist vorteilhaft, da beim Wechsel zwischen den Positionen der "Reflexzustand" zur Sonne durchfahren wird, das heißt, es kann ein direkter Reflexionsstrahl erzeugt werden, welcher in das Fahrerauge fällt. Dieser Zustand sollte so kurz wie möglich sein.

Vorzugsweise beträgt der Kippwinkel 10 Grad oder weniger. Insbesondere vorteilhaft beträgt er um die 5 Grad. Diese Verkippung kann beispielsweise in einem Fahrzeug einfach bewerkstelligt werden.

Vorzugsweise ist ein Aktorsystem vorgesehen, welches mit der Steuereinheit zumindest datentechnisch verbunden und mit dem optischen Wellenleiter verbunden ist. Somit kann die Steuereinheit mittels eines Signals an das Aktorsystem eine Verkippung des optischen Wellenleiters bewirken. Datentechnisch kann hier kabelgebunden oder drahtlos bedeuten.

Vorzugsweise ist die Bildgebungseinheit derart ausgestaltet, dass diese zusammen mit dem optischen Wellenleiter verkippt wird. Dadurch ist ein besonders einfacher Aufbau des optischen Systems möglich.

Erfindungsgemäß ist die Strahlenerfassungseinheit an der der Strahlungseinfallseite gegenüberliegenden Seite des optischen Wellenleiters angeordnet. In anderen Worten heißt das, dass die Strahlenerfassungseinheit dabei unterhalb des optischen Wellenleiters angeordnet ist. Dadurch ist ein genaues Erfassen der Strahlung und insbesondere des Einfallswinkelbereiches der Strahlung, beispielsweise der Sonnenstrahlung, möglich.

Die Strahlenerfassungseinheit weist zumindest eine/n erste/n Photodiode, Fototransistor, Pyrheliometer oder Photomultiplier und eine/n zweite/n Photodiode, Fototransistor, Pyrheliometer oder Photomultiplier zur Messung eines ersten Einfallswinkelbereiches und eines zweiten Einfallswinkelbereiches eines auf den optischen Wellenleiters auftreffenden Lichtstrahls auf. Weiterhin vorzugsweise ist die/der erste Photodiode, Fototransistor, Pyrheliometer oder Photomultiplier in einen zu dem ersten Einfallswinkelbereich im Wesentlichen identischen Winkel und die/der zweite Photodiode, Fototransistor, Pyrheliometer oder Photomultiplier in einen zu dem zweiten Einfallswinkelbereich im Wesentlichen identischen Winkel in der Strahlenerfassungseinheit angeordnet. In weiterer bevorzugter Ausgestaltung ist die/der erste Photodiode, Fototransistor, Pyrheliometer oder Photomultiplier derart in der Strahlenerfassungseinheit angeordnet, dass sie/er eine zu dem ersten Einfallswinkelbereich identische Orientierung aufweist und die/der zweite Photodiode, Fototransistor, Pyrheliometer oder Photomultiplier derart in der Strahlenerfassungseinheit angeordnet, dass sie/er eine zu dem zweiten Einfallswinkelbereich identische Orientierung aufweist.

Somit ist ein Messen des kritischen Winkels der Sonneneinstrahlung einfach möglich.

Mittels einer Photodiode lässt sich eine Sonneneinstrahlung besonders einfach messen. Die Photodioden werden in Sperrrichtung betrieben und lassen einen Photostrom und eine Photospannung mit zunehmender Beleuchtungsstärke fast linear ansteigen.

Anstatt Photodioden können auch Fototransistor oder Pyrheliometer, Photomultiplier zum Einsatz kommen.

In weiterer bevorzugter Ausgestaltung weist die Strahlenerfassungseinheit eine dritte Photodiode auf, welche zwischen der/dem ersten Photodiode, Fototransistor, Pyrheliometer oder Photomultiplier und der/dem zweiten Photodiode, Fototransistor, Pyrheliometer oder Photomultiplier angeordnet ist. Weiterhin vorzugsweise ist die dritte Photodiode mittig zwischen der/dem ersten Photodiode, Fototransistor, Pyrheliometer oder Photomultiplier und der/dem zweiten Photodiode, Fototransistor, Pyrheliometer oder Photomultiplier angeordnet.

Dadurch wird eine redundante Messung im Minimum der Spannungen, welche durch die/den erste/n Photodiode, Fototransistor, Pyrheliometer oder Photomultiplier und die/den zweite/n Photodiode, Fototransistor, Pyrheliometer oder Photomultiplier bei direkter Sonneneinstrahlung entstehen, ermöglicht. Dies bedeutet, dass die dritte Photodiode bei einem gewissen Sonnenstrahleinfallswinkelbereich ein Maximum in der Spannung aufweist, während die/der erste Photodiode, Fototransistor, Pyrheliometer oder Photomultiplier und die/der zweite Photodiode, Fototransistor, Pyrheliometer oder Photomultiplier bei diesem Sonnenstrahleinfallswinkelbereich jeweils ein Minimum aufweisen. Dies kann als Safety-Relevante Absicherung bei der Ermittlung des Einfallswinkelbereiches der Sonnenstrahlung dienen, da die dritte Photodiode durch ihre Lage eine Kontrollgröße zu der/dem ersten und zweiten Photodiode Fototransistor, Pyrheliometer oder Photomultiplier darstellt.

Weitere Eigenschaften und Vorteile der vorliegenden Erfindung ergeben sich aus der nachfolgenden Beschreibung unter Bezugnahme auf die beiliegenden Figuren. Darin zeigen schematisch:
FIG 1: ein ausgebildetes optisches System gemäß dem Stand der Technik,
FIG 2: ein erstes Ausführungsbeispiel eines erfindungsgemäßen optischen Systems,
FIG 3: das erfindungsgemäße optische System in einer verkippten Position,
FIG 4: eine weitere Ausgestaltung einer Strahlenerfassungseinheit mit Spannungsdiagramm,
FIG 5: die Funktion einer Safety-Relevanten Absicherung im Detail.

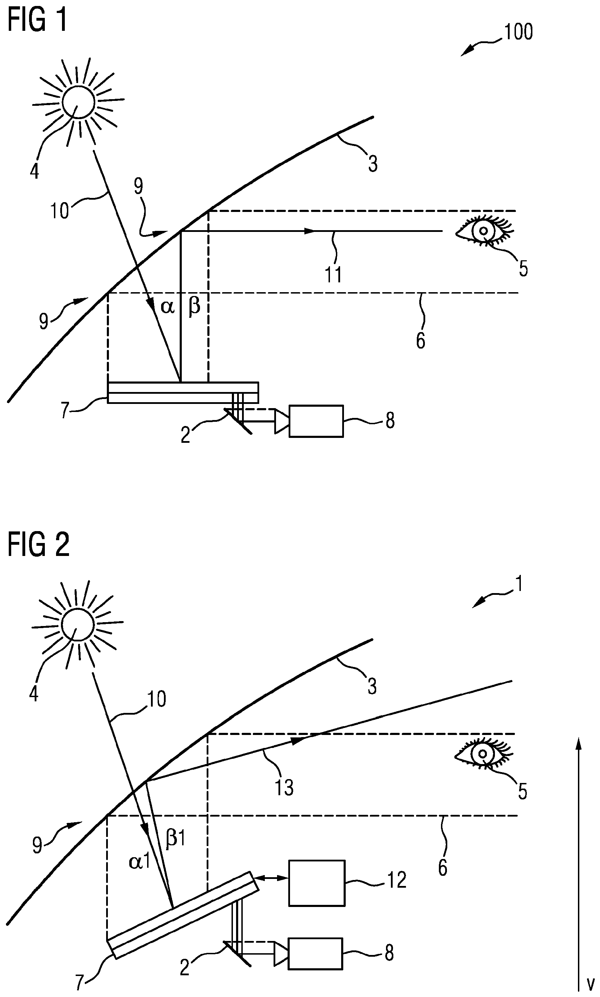

FIG 1 zeigt ein als Head-Up-Display ausgebildetes optisches System 100 gemäß dem Stand der Technik. Dieses weist eine Bildgebungseinheit 8 auf. Ferner weist das optische System 100 einen optischen Wellenleiter 7, insbesondere einen holografischen Wellenreiter (holographic-Waveguide), auf. Das in der Bildgebungseinheit 8 (PGU) generierte Bild, wird über den optischen Wellenleiter 7 und eine Windschutzscheibe 3 in den Bereich des Fahrerauges 5 als Nutzlicht 6 reflektiert.

Das generierte Bild bzw. dessen Strahl wird dabei in den beispielsweise mehrschichtigen optischen Wellenleiter 7 eingekoppelt, innerhalb des optischen Wellenleiters 7 umgelenkt und zur Windschutzscheibe 3 hin ausgekoppelt, um über die Windschutzscheibe 3 reflektiert das virtuelle Bild in einem Anzeigebereich 9 auszubilden.

Ein solcher optischer Wellenleiter 7 besteht aus einem optisch durchlässigen Material, das Licht mit den erforderlichen Wellenlängen ausbreitet. Das von der Bildgebungseinheit 8 ausgesendete Bild wird in dem optischen Wellenleiter 7 eingekoppelt. Dabei kann diese Einkopplung über einen Faltspiegel 2 erfolgen. Der optische Wellenleiter 7 ist in der Lage, hochauflösende Vollfarbbilder, die unter Verwendung von Lichtquellen mit breiter Bandbreite und Wellenlänge erzeugt werden, durch ein optisch durchlässiges oder "durchsichtiges" Medium auf das Fahrerauge 5 zu projizieren.

Ein solcher optischer Wellenleiter 7 weist jedoch eine Reihe von spezifischen Reflektionen bei Interaktion mit der Sonne 4 auf. Die kritische Interaktion entsteht bei direkter Sonneneinstrahlung 10, bei der das Licht der Sonne über den optischen Wellenleiter 7 und die Windschutzscheibe 3 direkt in das Fahrerauge 5 des Fahrers reflektiert wird.

Das direkte Sonnenlicht 10 fällt bei einem ersten Einfallswinkelbereich α1 auf den optischen Wellenleiter 7 und tritt unter einem ersten Ausfallwinkel β1 als erster direkter Reflexionsstrahl 11 aus.

Die Helligkeit dieses ersten direkten Reflexionsstrahls 11 kann leicht mehrere 10.000 cd/m² betragen, und ist daher als sicherheitskritisch einzustufen.

Gängige Dämpfungsstrategien über eine Louverfolie, Polarisatoren sowie spektrale Filter würden zwar eine Reduktion der Reflexionsstrahlung erzielen, die zwar die Reflexionsstrahlung abschwächen jedoch das Nutzlicht 6 überproportional dämpfen.

FIG 2 zeigt ein optisches System 1 in einer ersten Ausgestaltung gemäß der Erfindung.

Dieses weist eine Bildgebungseinheit 8 zur Erzeugung von einem Bild für den Fahrer in dem Anzeigebereich 9 auf. Ferner weist das optische System optional einen Faltspiegel 2 auf. Auch weist das optische System 1 den optischen Wellenleiter 7 auf, welcher identisch mit dem in FIG 1 sein kann.

Ferner weist das optische System 1 eine Windschutzscheibe 3 zur Reflexion des vom optischen Wellenleiter 7 erzeugten Bild auf.

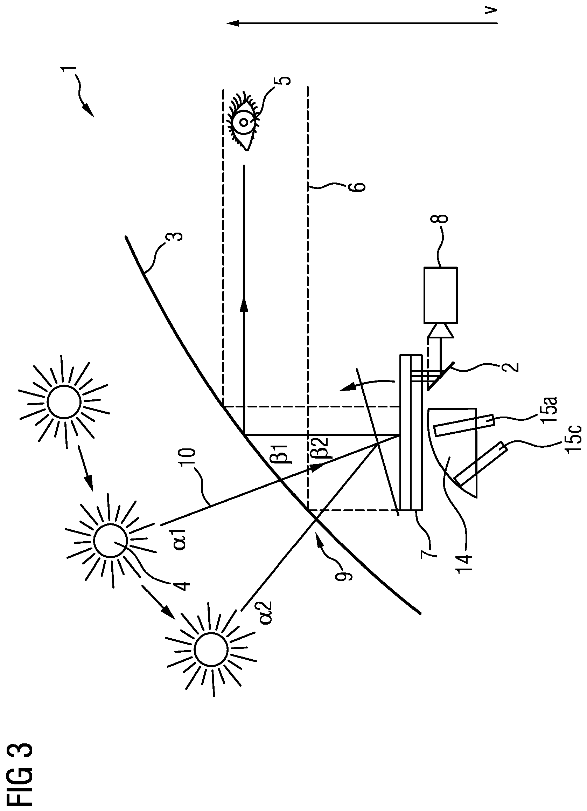

Ferner weist das optische System 1 eine Strahlenerfassungseinheit 14 (FIG 3) zur Erfassung des ersten Einfallswinkelbereiches α1 (FIG 1) von auf den optischen Wellenleiter 7 einfallende direkte Sonneneinstrahlung 10 auf.

Ferner ist eine Steuereinheit 12 vorgesehen, welche mit der Strahlenerfassungseinheit 14 (FIG 3) datentechnisch verbunden ist. Liegt der erfasste erste Einfallswinkelbereich α1 (FIG 1) und damit der Ausfallwinkel β1 in einem kritischen Bereich, so wird mittels der Steuereinheit 12 eine Verkippung des optischen Wellenleiters 7 von beispielsweise der ersten Position in die zweite Position bewirkt.

Die Verkippung kann durch ein Aktorsystem (nicht gezeigt) bewirkt werden. Weiterhin vorzugsweise ist eine Verkippung um eine Vertikalachse V vorgesehen, so dass die direkte Sonneneinstrahlung 10 unter einem zweiten Ausfallwinkel β2 reflektiert wird.

Da der optische Wellenleiter 7 vertikal verkippt wird, wird die direkte Sonneneinstrahlung 10 unter dem zweiten Ausfallwinkel β2 reflektiert. Die direkte Sonneneinstrahlung 10 wandert bei einer solchen Verkippung entlang der Vertikalachse V. Dies hat den Vorteil, dass der Fahrer durch typische Seitwärtsbewegungen wie sie oftmals bei Fahrern auftreten können, sich nicht in den reflektierten zweiten direkten Reflexionsstrahl 13 hineinbewegt.

Durch die Verkippung wird der erste direkte Reflexionsstrahl 11 zuverlässig aus dem Bereich des Fahrerauges 5 als zweiter direkter Reflexionsstrahl 13 heraus bewegt, so dass er nicht mehr das Fahrerauge 5 trifft.

Vorzugsweise ist die Steuereinheit 12 dazu ausgebildet, den optischen Wellenleiter 7 um einen vorgegebenen Winkel von einer ersten Position in eine zweite Position, das heißt zwischen zwei dezidierten Zuständen, vertikal um einen Kippwinkel zu verkippen. Die Größe des Kippwinkels ist vorab eingestellt und abhängig von der eingestellten Bildhöhe und der Achse der Verkippung.

Durch die Verkippung in lediglich zwei dezidierten Zuständen, das heißt zwischen zwei Positionen kann zudem eine schnelle Verkippung bewirkt werden. Zudem muss das Aktorsystem derart ausgebildet sein, dass es eine solche Verkippung zulässt. Eine solche Verkippung ist ausreichend, da die erste Position und die zweite Position hinreichend genug auseinanderliegen, so dass der direkte erste Reflexionsstrahl 11 in den zweiten Reflexionsstrahl 13 umgewandelt wird, bei dem der zweite Reflexionsstrahl 13 nicht mehr zum Fahrerauge 5 gelangt.

Durch das erfindungsgemäße optische System 1 mit lediglich zwei dezidierten Zuständen kann zwischen den Positionen unterhalb von 500 ms gewechselt werden. Der Grund für die Geschwindigkeit des Wechsels liegt vor allem in der nicht auszuschließenden Möglichkeit, dass beim Wechsel der "Reflexzustand" zur Sonne 4 durchfahren wird. Daher muss ein Wechsel schnell erfolgen.

Zusätzlich können die Positionen in einer 2-dimensionalen Bewegung durchfahren werden. Hierbei würde die zweite Dimension einer Kippung um die Horizontalachse (nicht gezeigt) entsprechen. Bei dieser Bewegung würde die Horizontalachse zum Ausweichen des Sonnenreflexes beim Übergang ausgesteuert werden. Die Horizontalachse ist dabei orthogonal zur Vertikalachse V.

Vorzugsweise beträgt ein solcher Kippwinkel bis zu 10 Grad, insbesondere ca. 5 Grad. Eine solche Verkippung kann problemlos ermöglicht werden.

Mehrere solcher Kippwinkel können beispielsweise in einer nicht gezeigten Speichereinheit in Abhängigkeit von der Bildhöhe gespeichert sein und von der Steuereinheit 12 auslesbar sein.

Durch das erfindungsgemäße optische System 1 ist eine Reflexionsvermeidung anhand einer geometrischen Entspiegelung durch Verkippung des optischen Wellenleiters 7 in kritischen Reflexionssituationen möglich. Die Möglichkeit eine solche Verkippung eines optischen Wellenleiters 7 anzuwenden liegt unter anderem in der Winkeltreue des eingekoppelten Lichtes, so dass sich trotzt Bewegung des optischen Wellenleiters 7 die Auskopplung nicht verändert. Weiterhin vorzugsweise können der Faltspiegel 2 und die Bildgebungseinheit 8 mit dem optischen Wellenleiter 7 verkippt werden.

Wird bei Wanderung der Sonne 4 und damit der Sonneneinstrahlung 10 der zweite Reflexionsstrahl 13 zum kritischen Reflexionsstrahl mit zweiten Einfallswinkelbereich α2, so wird eine (Rück)Verkippung des optischen Wellenleiters 7 von beispielsweise der zweiten Position in die erste Position bewirkt.

In anderen Worten: Liegt der Ausfallwinkel β2 in einem kritischen Bereich, so wird mittels der Steuereinheit 12 eine Verkippung des optischen Wellenleiters 7 beispielsweise der zweiten Position in die erste Position bewirkt.

Im Falle einer Verzerrung des entstehenden virtuellen Bildes beispielsweise aufgrund von Fehlern in der Windschutzscheibe 3 ist ein Ausgleich/ Kompensation über eine Software oder ein weiteres optisches Element notwendig.

FIG 3 zeigt das erfindungsgemäße optische System 1 in einer verkippten Position. Das optische System 1 weist die Strahlenerfassungseinheit 14 zur Erfassung des ersten Einfallswinkelbereiches α1 (FIG 1) von auf den optischen Wellenleiter 7 einfallende direkte Sonneneinstrahlung 10 auf.

Die Strahlenerfassungseinheit 14 weist zur Detektion des Sonnenstandes bzw. des Einfallswinkelbereiches α1 zumindest zwei diskrete Dioden auf. Die Dioden sind hier vorzugsweise als Photodioden 15a, 15c ausgebildet. Die Strahlenerfassungseinheit 14 ist dabei unterhalb des optischen Wellenleiters 7 angeordnet, wobei unterhalb eine Anordnung an der der Strahlungseinfallseite gegenüberliegenden Seite des optischen Wellenleiters 7 ist.

Die Photodioden 15a, 15c sind in Winkel und Orientierung identisch zu dem Einfallswinkelbereich α1 und dem Einfallswinkelbereich α2, das heißt denjenigen Winkeln, welche kritische Reflexionsstrahlen erzeugen, angeordnet.

Die Photodioden 15a, 15c werden in Sperrrichtung betrieben und lassen einen Fotostrom mit zunehmender Beleuchtungsstärke fast linear ansteigen. Ohne Lichteinfall weist der Fotostrom, bei dem es sich um einen Sperrstrom handelt, ähnliche geringe Werte wie bei anderen Siliziumdioden auf. Sobald Licht in die Sperrschicht fällt, werden durch die Lichtteilchen zusätzliche Elektronen aus dem Kristallgitter herausgeschlagen. Dadurch steigt der Fotostrom mit zunehmender Beleuchtungsstärke an. Der Zusammenhang zwischen Fotostrom und Beleuchtungsstärke ist nahezu linear.

Das heißt, ohne Lichteinfall verhält sich eine Photodiode wie eine herkömmliche Diode. Durch den Lichteinfall werden in der Sperrschicht zusätzliche Elektronen frei und der Fotostrom steigt an.

Anstatt Photodioden können auch Fototransistoren verwendet werden oder Pyrheliometer, Photomultiplier.

Steigt der Fotostrom, das heißt die Photospannung an, so bewirkt dies eine Verkippung des optischen Wellenleiters 7. Dabei bedeutet ein Anstieg, dass der Einfallswinkelbereich α1 oder α2 und damit ein kritischer erster Reflexionsstrahl 12 oder ein kritischer zweiter Reflexionsstrahl 13 vorliegt.

Ferner ist eine Steuereinheit 12 vorgesehen, welche mit der Strahlenerfassungseinheit 14 datentechnisch verbunden ist. Liegt der erfasste Einfallswinkelbereich α1 (FIG 1) und damit der Ausfallwinkel β1 in einem kritischen Bereich so wird mittels der Steuereinheit 12 eine Verkippung des optischen Wellenleiters 7 von beispielsweise der ersten Position in die zweite Position bewirkt.

Wird bei Wanderung der Sonne 4 und damit der Sonneneinstrahlung 10 der zweite Reflexionsstrahl 13 mit kritischen zweiten Einfallswinkelbereich α2 zum kritischen Reflexionsstrahl, so wird eine (Rück)Verkippung des optischen Wellenleiters 7 von beispielsweise der zweiten Position in die erste Position bewirkt.

Dabei kann ein Aktorsystem (nicht gezeigt) vorgesehen sein. Weiterhin vorzugsweise ist eine Verkippung um eine Vertikalachse V vorgesehen, so dass die direkte Sonneneinstrahlung 10 unter einem zweiten Ausfallwinkel β2 reflektiert wird.

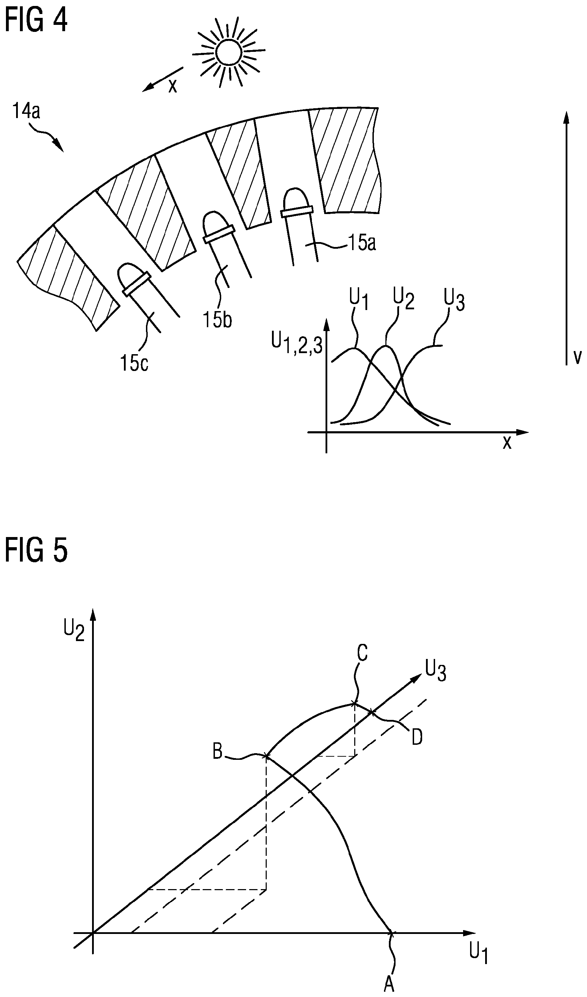

FIG 4 zeigt eine zweite Ausgestaltung einer Strahlenerfassungseinheit 14a.

Diese Strahlenerfassungseinheit 14a weist zur Detektion des Sonnenstandes bzw. des Einfallswinkelbereiches α1, α2 auf den optischen Wellenleiter 7 (FIG 3) die diskreten Photodioden, Fototransistoren, Pyrheliometer oder Photomultiplier, wie sie in FIG 3 beschrieben sind, auf. Die Photodioden, Fototransistor, Pyrheliometer oder Photomultiplier können hier ebenfalls vorzugsweise als Photodioden 15a, 15c ausgebildet sein. Die Strahlenerfassungseinheit 14a ist dabei unterhalb des optischen Wellenleiters 7 (FIG 3) angeordnet, wobei unterhalb, eine Anordnung an der der Strahlungseinfallseite gegenüberliegenden Seite des optischen Wellenleiters 7 (FIG 3) ist.

Die Photodioden 15a, 15c sind in Winkel und Orientierung identisch zu dem Einfallswinkelbereich α1 und dem Einfallswinkelbereich α2, das heißt denjenigen Winkeln, welche kritische Reflexionsstrahlen erzeugen, angeordnet.

Die Photodioden 15a, 15c werden in Sperrrichtung betrieben und lassen einen Photostrom und eine Photospannung U1, U3 mit zunehmender Beleuchtungsstärke fast linear ansteigen. Ohne Lichteinfall weist die Spannung U1 einen geringen Wert auf. Das heißt die Spannung U1 und U3 hängt vom Stand der Sonne 4 ab, welche sich hier im Laufe des Tages entlang eines Weges X bewegt. Somit hängt die Spannung U1, U3 sowohl von der Position der Sonne 4 entlang eines Weges X ab als auch von der Position des optischen Wellenleiters 7 (FIG 3) (verkippt oder nicht verkippt, das heißt erste oder zweite Position des optischen Wellenleiters 7 (FIG 3)) ab. Sobald Licht auf die Photodiode 15a oder 15c direkt einfällt, steigt die Spannung U1, U3 an.

Ferner weist die Strahlenerfassungseinheit 14a noch eine dritte Photodiode 15b auf. Diese ist mittig zwischen der ersten Photodiode 15a und der zweiten Photodiode 15c angeordnet, und ermöglicht so eine redundante Messung im Minimum der Spannungen. Dies bedeutet, dass die dritte Photodiode 15b ein Maximum in der Spannung U2 bei einem Sonnenstrahleinfallswinkelbereich aufweist, während die erste Photodiode 15a und die zweite Photodiode 15c bei diesem Sonnenstrahleinfallswinkelbereich jeweils ein Minimum aufweisen. Dies kann als Safety-Relevante Absicherung bei der Ermittlung des Einfallswinkelbereiches der Sonnenstrahlung genutzt werden, indem die dritte Photodiode 15b durch ihre Lage eine Kontrollgröße zu der ersten Photodiode 15a und zu der zweiten Photodiode 15c darstellt.

FIG 5 zeigt eine solche Safety-Relevante Absicherung im Detail. Mit Ausnahme der Extremlagen existiert durch die Kontrollgröße U2 ein Übergangsbereich, der sich im Spannungsdiagramm als dritte Dimension darstellt. Mit Hilfe eines "Tunnels" um eine Kennlinie lässt sich damit ein Aktions- und Steuerungsbereich um die Daten legen, während eine Abweichung um diese Verhältnisse der drei Spannungen U1, U2, U3 eine Fehlfunktion darstellen. Die Punkte A; B, C, D beschreiben eine solche mögliche Kennlinie.

## Patentansprüche

1. Optisches System (1) zur Erzeugung eines zwei- oder dreidimensionalen Bildes, umfassend
eine Bildgebungseinheit (8) zur optischen Übertragung und/oder Generierung von Bildinformationen, und
einen optischen Wellenleiter (7), welcher ausgebildet ist, die Bildinformationen in mindestens eine Richtung zu projizieren,
und eine gegenüber dem optischen Wellenleiter (7) geneigte Scheibe zur Reflexion der projizierten Bildinformationen des optischen Wellenleiters (7), so dass der Betrachter die Bildinformationen als ein virtuelles Bild in einem Anzeigebereich (9) an einer der benutzerabgewandten Seite der Scheibe wahrnimmt,
wobei eine Strahlenerfassungseinheit (14, 14a) zur Erfassung eines Einfallswinkelbereiches (α1, α2) von auf den optischen Wellenleiter (7) einfallende Strahlung vorgesehen ist, und eine Steuereinheit (12) vorgesehen ist, welche mit der Strahlenerfassungseinheit (14, 14a ) zur Datenübertragung verbunden ist, und welche ein Verkippen des optischen Wellenleiters (7) bei einem vorgegebenen Einfallswinkelbereichs bewerkstelligt, **dadurch gekennzeichnet, dass** die Strahlenerfassungseinheit (14,14a) an der der Strahlungseinfallseite gegenüberliegenden Seite des optischen Wellenleiters (7) angeordnet ist.

2. Optisches System (1) nach Anspruch 1, **dadurch gekennzeichnet, dass** die Steuereinheit (12) dazu ausgebildet ist, durch die Verkippung einen Ausfallwinkel (β1, β2) der einfallenden Strahlung zu verändern.

3. Optisches System (1) nach Anspruch 1 oder 2, **dadurch gekennzeichnet, dass**
die Steuereinheit (12) dazu ausgebildet ist, eine Verkippung entlang einer Vertikalachse (V) des optischen Wellenleiters (7) zu bewerkstelligen.

4. Optisches System (1) nach einem der vorhergehenden Ansprüche, **dadurch gekennzeichnet, dass**
die Steuereinheit (12) dazu ausgebildet ist, den optischen Wellenleiter (7) um einen Kippwinkel zwischen einer ersten Position und einer zweiten Position zu verkippen.

5. Optisches System (1) nach Anspruch 4, **dadurch gekennzeichnet, dass**
der Kippwinkel 10 Grad oder weniger beträgt.

6. Optisches System (1) nach einem der vorhergehenden Ansprüche, **dadurch gekennzeichnet, dass**
ein Aktorsystem vorgesehen ist, welches mit der Steuereinheit (12) zumindest datentechnisch verbunden ist und mit dem optischen Wellenleiter (7) verbunden ist.

7. Optisches System (1) nach Anspruch 6, **dadurch gekennzeichnet, dass**
die Bildgebungseinheit (8) derart ausgestaltet ist, dass diese zusammen mit dem optischen Wellenleiter (7) verkippt wird.

8. Optisches System (1) nach einem der vorhergehenden Ansprüche, **dadurch gekennzeichnet, dass**
die Strahlenerfassungseinheit (14,14a) zumindest eine/n erste/n Photodiode, Fototransistor, Pyrheliometer, oder Photomultiplier und eine/n zweite/n Photodiode, Fototransistor, Pyrheliometer, oder
Photomultiplier zur Messung eines ersten Einfallswinkelbereiches (α1) und eines zweiten Einfallswinkelbereiches (α2) eines auf den optischen Wellenleiters (7) auftreffenden Lichtstrahls aufweist.

9. Optisches System (1) nach Anspruch 8, **dadurch gekennzeichnet, dass**
die/der erste Photodiode, Fototransistor, Pyrheliometer, oder
Photomultiplier in einen zu dem ersten Einfallswinkelbereich (α1) im Wesentlichen identischen Winkel und die/der zweite Photodiode, Fototransistor, Pyrheliometer, oder Photomultiplier in einen zu dem zweiten Einfallswinkelbereich (α2) im Wesentlichen identischen Winkel in der Strahlenerfassungseinheit (14, 14a) angeordnet ist.

10. Optisches System (1) nach Anspruch 8 oder 9, **dadurch gekenn**- **zeichnet, dass**
die erste/der Photodiode, Fototransistor, Pyrheliometer, oder
Photomultiplier derart in der Strahlenerfassungseinheit (14, 14a) angeordnet ist, dass sie eine zu dem ersten Einfallswinkelbereich (α1) identische Orientierung aufweist und die/der zweite Photodiode, Fototransistor, Pyrheliometer, oder Photomultiplier derart in der Strahlenerfassungseinheit (14, 14a) angeordnet ist, dass sie eine zu dem zweiten Einfallswinkelbereich (α2) identische Orientierung aufweist.

11. Optisches System (1) nach einem der vorhergehenden Ansprüche 8 bis 10, **dadurch gekennzeichnet, dass**
die Strahlenerfassungseinheit (14,14a) eine dritte Photodiode aufweist, welche zwischen der/dem ersten Photodiode, Fototransistor, Pyrheliometer, oder Photomultiplier und der/dem zweiten Photodiode, Fototransistor, Pyrheliometer, oder Photomultiplier angeordnet ist.

12. Optisches System (1) nach Anspruch 11, **dadurch gekennzeichnet, dass**
die dritte Photodiode mittig zwischen der/dem ersten Photodiode, Fototransistor, oder Pyrheliometer, oder Photomultiplier und der/dem zweiten Photodiode, Fototransistor, Pyrheliometer, oder
Photomultiplier angeordnet ist.

13. Optisches System (1) nach einem der vorhergehenden Ansprüche, **da**- **durch gekennzeichnet, dass**
das optische System (1) als ein Head-Up-Display ausgestaltet ist.

## Claims

1. Optical system (1) for creating a two- or three-dimensional image, comprising a picture generating unit (8) for optical transfer and/or generation of image information, and
an optical waveguide (7) configured to project the image information in at least one direction,
and a pane inclined relative to the optical waveguide (7) and serving for reflecting the projected image information of the optical waveguide (7), so that the observer perceives the image information as a virtual image in a display region (9) on a side of the pane facing away from the user,
wherein a radiation capturing unit (14, 14a) is provided for capturing an incidence angle range (α1, α2) of radiation incident on the optical waveguide (7), and a control unit (12) is provided, which is connected to the radiation capturing unit (14, 14a) for data transfer, and which brings about tilting of the optical waveguide (7) in conjunction with a predefined incidence angle range, **characterized in that** the radiation capturing unit (14, 14a) is arranged on the opposite side of the optical waveguide (7) with respect to the radiation incidence side.

2. Optical system (1) according to Claim 1, **characterized in that**
the control unit (12) is configured to change a reflection angle (β1, β2) of the incident radiation by the tilting.

3. Optical system (1) according to Claim 1 or 2, **characterized in that**
the control unit (12) is configured to bring about a tilting along a vertical axis (V) of the optical waveguide (7).

4. Optical system (1) according to any of the preceding claims, **characterized in that**
the control unit (12) is configured to tilt the optical waveguide (7) by a tilt angle between a first position and a second position.

5. Optical system (1) according to Claim 4, **characterized in that** the tilt angle is 10 degrees or less.

6. Optical system (1) according to any of the preceding claims, **characterized in that**
an actuator system is provided, which is connected to the control unit (12) at least in terms of data technology and is connected to the optical waveguide (7).

7. Optical system (1) according to Claim 6, **characterized in that**
the picture generating unit (8) is designed in such a way that it is tilted together with the optical waveguide (7).

8. Optical system (1) according to any of the preceding claims, **characterized in that**
the radiation capturing unit (14, 14a) has at least a first photodiode, phototransistor, pyrheliometer, or photomultiplier and a second photodiode, phototransistor, pyrheliometer, or
photomultiplier for measuring a first incidence angle range (α1) and a second incidence angle range (α2) of a light beam impinging on the optical waveguide (7).

9. Optical system (1) according to Claim 8, **characterized in that**
the first photodiode, phototransistor, pyrheliometer, or photomultiplier is arranged at an angle substantially identical to the first incidence angle range (α1) and the second photodiode, phototransistor, pyrheliometer, or photomultiplier is arranged at an angle substantially identical to the second incidence angle range (α2) in the radiation capturing unit (14, 14a).

10. Optical system (1) according to Claim 8 or 9, **characterized in that**
the first photodiode, phototransistor, pyrheliometer, or
photomultiplier is arranged in the radiation capturing unit (14, 14a) in such a way that it has an orientation identical to the first incidence angle range (α1) and the second photodiode, phototransistor, pyrheliometer, or
photomultiplier is arranged in the radiation capturing unit (14, 14a) in such a way that it has an orientation identical to the second incidence angle range (α2).

11. Optical system (1) according to any of the preceding Claims 8 to 10,
**characterized in that**
the radiation capturing unit (14, 14a) has a third photodiode arranged between the first photodiode, phototransistor, pyrheliometer, or
photomultiplier and the second photodiode, phototransistor, pyrheliometer, or photomultiplier.

12. Optical system (1) according to Claim 11, **characterized in that** the third photodiode is arranged centrally between the first photodiode, phototransistor, or pyrheliometer, or photomultiplier and the second photodiode, phototransistor, pyrheliometer, or photomultiplier.

13. Optical system (1) according to any of the preceding claims, **characterized in that**
the optical system (1) is designed as a head-up display.

## Revendications

1. Système optique (1) destiné à générer une image bidimensionnelle ou tridimensionnelle, comprenant
une unité d'imagerie (8) destinée à la transmission optique et/ou la génération d'informations d'image, et
un guide d'ondes optique (7), lequel est configuré pour projeter les informations d'image dans au moins une direction,
et une vitre inclinée par rapport au guide d'ondes optique (7) destinée à la réflexion des informations d'image projetées du guide d'ondes optique (7), de sorte que l'observateur perçoive les informations d'image sous la forme d'une image virtuelle dans une zone d'affichage (9) sur l'un des côtés de la vitre opposé à l'utilisateur,
une unité de détection de rayonnement (14, 14a) étant prévue pour détecter une plage d'angles d'incidence (α1, α2) du rayonnement incident sur le guide d'ondes optique (7), et une unité de commande (12) étant prévue, laquelle est connectée à l'unité de détection de rayonnement (14, 14a) pour la transmission de données, et laquelle réalise un basculement du guide d'ondes optique (7) avec une plage d'angles d'incidence prédéfinie, **caractérisé en ce que**
l'unité de détection de rayonnement (14, 14a) est disposée sur le côté du guide d'ondes optique (7) opposé au côté d'incidence du rayonnement.

2. Système optique (1) selon la revendication 1, **caractérisé en ce que**
l'unité de commande (12) est configurée pour modifier, par le basculement, un angle de projection (β1, β2) du rayonnement incident.

3. Système optique (1) selon la revendication 1 ou 2, **caractérisé en ce que**
l'unité de commande (12) est configurée pour effectuer un basculement le long d'un axe vertical (V) du guide d'ondes optique (7).

4. Système optique (1) selon l'une des revendications précédentes, **caractérisé en ce que**
l'unité de commande (12) est configurée pour basculer le guide d'ondes optique (7) d'un angle de basculement entre une première position et une deuxième position.

5. Système optique (1) selon la revendication 4, **caractérisé en ce que**
l'angle de basculement est inférieur ou égal à 10 degrés.

6. Système optique (1) selon l'une des revendications précédentes, **caractérisé en ce que**
un système d'actionneurs est présent, lequel est connecté à l'unité de commande (12) au moins du point de vue informatique et lequel est connecté au guide d'ondes optique (7).

7. Système optique (1) selon la revendication 6, **caractérisé en ce que**
l'unité d'imagerie (8) est conçue de telle sorte qu'elle est basculée conjointement avec le guide d'ondes optique (7).

8. Système optique (1) selon l'une des revendications précédentes, **caractérisé en ce que**
l'unité de détection de rayonnement (14, 14a) possède au moins un premier / une première photodiode, phototransistor, pyrhéliomètre ou photomultiplicateur et un/une deuxième photodiode, phototransistor, pyrhéliomètre ou photomultiplicateur pour mesurer une première plage d'angles d'incidence (α1) et une deuxième plage d'angles d'incidence (α2) d'un faisceau lumineux incident sur le guide d'ondes optique (7).

9. Système optique (1) selon la revendication 8, **caractérisé en ce que** le premier / la première photodiode, phototransistor, pyrhéliomètre ou photomultiplicateur est disposé dans un angle sensiblement identique à la première plage d'angles d'incidence (α1) et le/la deuxième photodiode, phototransistor, pyrhéliomètre ou photomultiplicateur est disposé dans un angle sensiblement identique à la deuxième plage d'angles d'incidence (α2) dans l'unité de détection de rayonnement (14, 14a).

10. Système optique (1) selon la revendication 8 ou 9, **caractérisé en ce que** le premier / la première photodiode, phototransistor, pyrhéliomètre ou photomultiplicateur est disposé(e) dans l'unité de détection de rayonnement (14, 14a) de telle sorte qu'il/elle présente une orientation identique à la première plage d'angles d'incidence (α1) et le/la deuxième photodiode, phototransistor, pyrhéliomètre
ou photomultiplicateur est disposé(e) dans l'unité de détection de rayonnement (14, 14a) de telle sorte qu'il/elle présente une orientation identique à la deuxième plage d'angles d'incidence (α2).

11. Système optique (1) selon l'une des revendications 8 à 10 précédentes,
**caractérisé en ce que**
l'unité de détection de rayonnement (14, 14a) possède une troisième photodiode, laquelle est disposée entre le premier / la première photodiode, phototransistor, pyrhéliomètre ou
photomultiplicateur et le/la deuxième photodiode, phototransistor, pyrhéliomètre ou photomultiplicateur.

12. Système optique (1) selon la revendication 11, **caractérisé en ce que** la troisième photodiode est disposée au centre entre le premier / la première photodiode, phototransistor, pyrhéliomètre ou photomultiplicateur et le/la deuxième photodiode, phototransistor, pyrhéliomètre ou photomultiplicateur.

13. Système optique (1) selon l'une des revendications précédentes, **caractérisé en ce que**
le système optique (1) est réalisé sous la forme d'un afficheur tête haute.
